# EUROPEAN PATENT APPLICATION

(11) **EP 4 130 936 A1**
(43) Date of publication of application: **08.02.2023**
(21) Application number: 21275102.8
(22) Date of filing: 02.08.2021
(51) Int. Cl.: G06F 3/01, B64F 5/00

(54) **POSITIONING APPARATUS AND METHOD**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

Apparatus and method for determining the relative position of an operator with respect to a hazardous object, such as an airplane in a maintenance hangar. A portable or wearable personal device is carried by the operator (e.g. an augmented reality headset). Sensors (e.g.cameras) on the personal device collect environment data from which the presence of the object and the relative position of the operator are determined at a processing unit. One or more safety boundaries are calculated based on the object and displayed as augmented reality to the user in his field of view. Alarms are triggered by crossing the boundaries.

## Description

### FIELD

The present invention relates to a positioning apparatus and method.

### BACKGROUND

Where an operator is expected to be in proximity to an object, and certain boundaries defined by that object and extending beyond that object may need to be respected, it is known to add physical markers or barriers around that object corresponding to such boundaries.

For example, where an operator is expected to approach a platform such as an aircraft in a maintenance bay, physical barriers may be placed at a given stand-off distance around engine intakes and exhausts. Accordingly, the operator is alerted of a zone which should not be entered into.

### SUMMARY

According to an aspect of the present invention, there is provided a positioning apparatus for an operator at an object, the apparatus comprising: a personal sensor, whereby the operator's environment may be assessed to generate sensor data; a personal feedback device for issuing at least one alert signal to the operator; a processing unit, operably connected to the personal sensor, and the personal feedback device, the processing unit comprising: an object identification module, for obtaining object data relating to the object; a boundary module for defining, using the object data, at least one first extended boundary for the object; and a positioning module for generating positioning data for determining the position of the personal sensor relative to the object, and an alert module configured such that a first alert signal is issued to the operator in dependence on the position of the personal sensor with respect to the first extended boundary for the object.

Such a provision can enable the replacement of physical barriers and markings with augmented reality, or mixed reality symbology or barriers or markers, which may appear in various forms. For example these may have the form of 'pop up' notifications, or may have the form of computer generated 3D models which are anchored to real world locations so as to appear present in the environment, from the perspective of the operator.

The apparatus may be configured such that if the positioning data indicates that the operator is within the first extended boundary for the object then the first alert signal is generated.

The boundary module additionally may define at least one second extended boundary which may be combined with the object data or with the at least one first extended boundary, to define a second extended boundary for the object.

The at least one first extended boundary may be stood-off from at least a portion of the object and the at least one second extended boundary may be bounded between the first extended boundary and the object.

Alternatively, the 'zone' of the first extended boundary is not stood off from the object, and so overlaps with the 'zone' defined by the second extended boundary. In such circumstances, both alerts may be present when the operator is in the second extended boundary.

It may be provided that if the positioning data indicates that the operator is within the second extended boundary, then a second alert signal is generated.

Such a provision can enable a graduated warning level, which varies with proximity to relevant hazards.

There may be further provided: - a personal display, operably connected to the processing unit whereby augmenting imagery can be introduced into the operator's field of view, wherein the positioning apparatus is configured such that the first alert signal is a visual representation of the second extended boundary, shown at the display as corresponding augmenting imagery.

Accordingly, the operator's attention need only be taken up by information pertaining to the location of the hazard when they are tending towards its location. This can therefore tend to reduce the distractions which the operator may be subject to.

The visual representation of the second extended boundary, shown at the display as corresponding augmenting imagery, may be a wireframe volume or a 3D volume, scaled to match the second extended boundary.

This could further provide that information is conveyed to the operator in an intuitive manner.

The apparatus may, further comprise: a personal display, operably connected to the processing unit whereby augmenting imagery can be introduced into the operator's field of view, and wherein the first alert signal comprises augmenting imagery.

As such it can be enabled that information arising from understanding of user's position to be displayed conveniently and clearly to the user.

The object identification module may comprise: an object recognition module; and an object database comprising at least one set of object data, each set of object data being associated with a corresponding predetermined object; whereby the processing unit is configured to receive sensor data, compare it with the at least one set of object data in the object database, and in the event that the correlation between the sensor data and one of the at least one set of object data is above a threshold, generating a signal indicating the identification of a predetermined object.

The processing unit may be configured to compare the sensor data to the object data of the identified predetermined object, and generate at least a portion of the positioning data relating the position of the identified predetermined object to the position of the sensor.

This can provide that the operator's position can be determined. Further, this can provide a system for position detection where other forms of positioning would be compromised or undermined e.g. where spatial mapping is difficult because walls are far away, or where GPS systems are denied (e.g. due to an indoor operational environment), or where other technologies are not permitted due to sensitive safety environment.

The object database may comprise object data for at least one aircraft, and where the corresponding predetermined object for the at least one aircraft is the real-world aircraft, or a real-world visual cue associated with the at least one aircraft.

The object may be a vehicle and optionally an aircraft in an indoor maintenance bay.

This can tend to improve the safety of the operators' working environment and reduce the likelihood of damage to the aircraft.

The processing unit may be remote from the personal sensor and each may be provided with a communications module for wireless communications, the wireless communications optionally being effected by intensity modulated free space optical methods.

Such a provision may no longer need to be portable and so can enable a heavier, more computationally powerful processing unit and thereby enable real-time operation at higher resolutions or polygon counts, or enable longer periods of use as a wired power supply may be more achievable, especially compared with a wearable processing unit.

The boundary module may be configured to define at least one alternative extended boundary which may be combined with at least one set of object data to define an alternative extended boundary for the object.

Accordingly, a greater range of maintenance actions can be undertaken, with different hazardous systems of the object being activated at a given time.

According to a second aspect of the invention, there is provided a positioning method for determining the position of an object relative to an operator comprising: receiving data about the operator's environment at a personal sensor to generate sensor data; at an object identification module, obtaining object data relating to the object; at a boundary module, determining at least one first extended boundary for combination with the object data to define a first extended boundary for the object; at a positioning module, determining the position of the personal sensor relative to the object, providing an alert module for, in dependence on the position of the personal sensor with respect to the boundary, generating alert data for causing a feedback device to issue a first alert signal to the operator.

### BRIEF DESCRIPTION OF THE FIGURES

Embodiments of the invention will now be described by way of example only with reference to the figures, in which:
Figure 1 shows a schematic diagram of an apparatus according to the present invention;
Figure 2a shows a view from above of an operator in proximity to an object, with a first boundary and a second boundary indicated schematically;
Figure 2b shows an operator's perspective on the scene of Figure 2a;
Figure 3a shows a side view of an operator approaching an aircraft in a hangar, the operator being outside the hazard zone and the show zone, and Figure 3b shows a corresponding operator's view;
Figure 4a shows a side view of an operator approaching an aircraft, and Figure 4b shows a corresponding operator's view, the operator being outside the hazard zone and inside the show zone, and Figure 4c shows a further operator's view with the operator in a further position outside the hazard zone and inside the show zone;
Figure 5a shows a side view of an operator approaching an aircraft and Figure 5b shows a corresponding operator's view, the operator being inside the hazard zone;
Figure 6 shows a control input for gesture based switching between different boundary types;
Figure 7a shows a operator's view of an alternative boundary at a first time, Figure 7b shows the operator's view of Figure 7a at a later time, and Figure 7c shows the operator's view of figure 7a at an even later time;
Figure 8 shows an operator's view of another alternative boundary;
Figure 9 shows a headset as may be used in the positioning apparatus; and,
Figure 10 shows a flow diagram for a method of positioning an operator.

### DETAILED DESCRIPTION

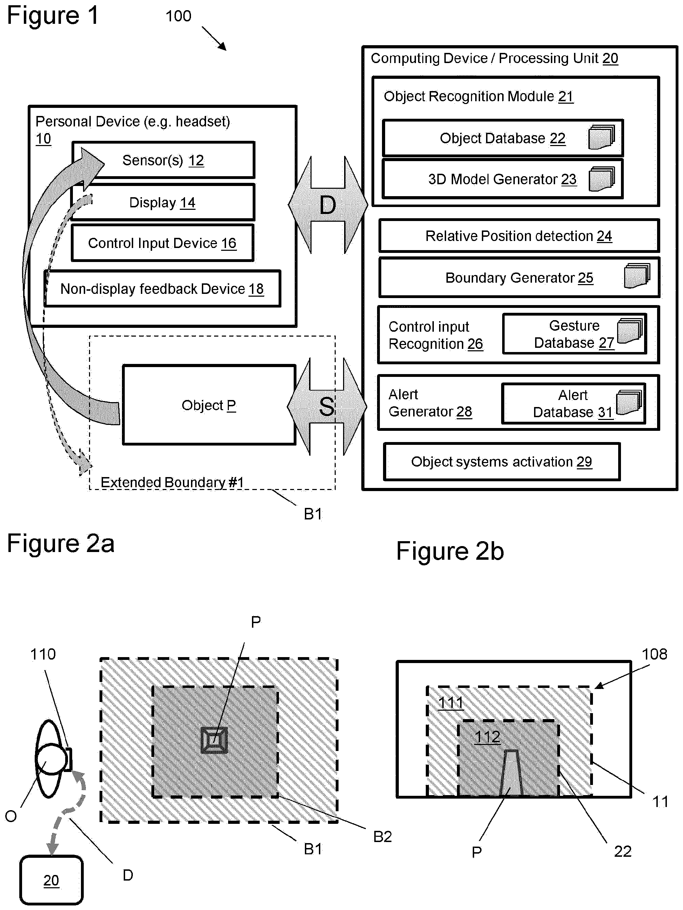

Referring to Figure 1, there is shown a positioning apparatus 100 being used in relation to an object P.

The positioning apparatus 100 comprises a personal device 10 and a processing unit 20 which are operably connected so as to be able to send and receive data D between themselves. Data D is, in the present example sent by a wireless communications protocol, and both the personal device 10 and the processing unit 20 are provided with respective communications modules (not shown) for this purpose. (In other examples, the personal device 10 and processing unit 20 may be provided within the same housing as a user-worn or user-carried unit).

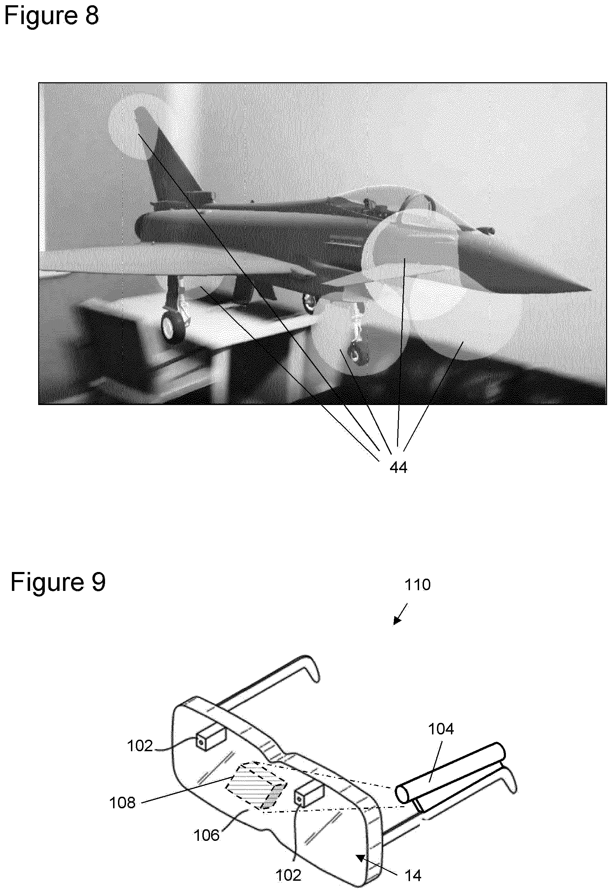

The personal device 10, with further reference to Figure 9, is configured to be worn or carried by an operator O, and in the present example has the form of a headset unit 110, which may be mounted on the operator's head such that it may extend into the operator's field of view.

The personal device 10 comprises a personal sensor 12, a personal display 14 for use as a visual feedback device, a personal control input device 16, and a non-display feedback device 18.

The personal sensor 12 is configured to scan, receive or detect characteristics of the operator's ambient environment and particularly their field of view, and thereby derive sensor data. In the present example, and referring to Figure 9, the personal sensor 12 comprises a pair of image sensors 102 (cameras operating in the visible light range) with a field of view substantially overlapping with the operator's field of view. The pair of image sensors are spaced apart laterally in the operator's eye line to permit stereoscopic depth perception.

The personal display 14 is configured to introduce augmenting imagery 108 into the operator's field of view, as a human-interpretable signal or alert. Such augmenting imagery 108 may alternatively be referred to as 3D models, 3D volumes, computer generated imagery, additional imagery, or holograms. In the present example the personal display 14 comprises a see-through visor 106 and a projector 104. The visor 106 covers at least a portion of the operator's field of view and the projector 104 is arranged to project augmenting imagery 108 onto the visor 106 such that, from the operator's perspective, the augmenting imagery 108 can appear to be located in front of them and beyond the visor 106 (i.e. at a focal length beyond the visor 106). Accordingly, the personal display 14 is arranged to receive suitable display data for driving the projector 104 to achieve desired augmenting imagery 108.

The personal control input device 16 is configured to convert operator commands into control data, which may be relayed for example to the processing unit 20. In the present example, the personal control input device 16 comprises image sensors (which may be the image sensors 102 used for generating the sensor data) for capturing the hand gestures of the operator.

The personal non-display feedback device 18 is configured to provide human-interpretable signals or alerts to the operator, which may supplement or replace such signals or alerts being provided at the display 14. In the present example, the feedback device 18 is an audio speaker (not shown) for issuing audible information.

The processing unit 20 comprises an object recognition module 21, a relative position detection module 24, a boundary generator module 25, a control input recognition module 26, a gesture database 27, an alert generator 28, and an object systems activation module 29.

The object recognition module 21 further comprises an object database 22 and a 3D model generator module 23. The object recognition module 21 is arranged to receive sensor data (e.g. from the personal sensor 12) and compare it to sets of stored object data in the object database 22. Where sensor data matches a set of stored object data, the corresponding object may be confirmed as present.

The object recognition module 21 is also operable to determine and select from the 3D model generator module 23 a 3D model of a predetermined object, chosen from a number of possible predetermined objects. In the present example the 3D model may be selected to correspond to the object confirmed as present by the sensor data comparison. That 3D model is a form of object data, albeit model object data rather than stored object data.

The 3D model has the form of imaging instructions for the display where an object is defined by algorithmic polygons such that a view of the object can be readily updated in real-time as the operator's perspective changes to give the impression that a 3D object is present at a particular location in the operator's environment. Often, the 3D model will be anchored to the real world object it corresponds to.

The relative position detection module 24 is configured to receive sensor data and object data from the object recognition module 21, perform a calculation from these, and thereby determine the operator's position in relation to the object. The calculation may be based on an analysis of the orientation and scale of the object, as detected in the sensor data, compared with the relevant object data, as may be retrieved from the object database. Accordingly the relative position detection module 24 is configured to process sensor data and output positioning data for further use by the processing unit 20.

The boundary generator module 25 is configured to receive object data from the object recognition module 21, and thereby be informed as to any object(s) detected. Further, the boundary generator module 25 is configured to parse the detected object, with reference to the control input recognition module 26, and then generate boundary data defining a zone e.g. that extends beyond the detected object's physical boundary. In order to generate such boundary data, the module 25 may retrieve it from a prepopulated database (e.g. where particular pre-defined boundaries are mapped to pre-defined objects), or may calculate it using a selection of parameters (e.g. by adding a fixed-distance stand off boundary around the outline of the 3D model of the object).

The control input recognition module 26 is configured to receive control data from the control input device 16. In the present example, the control input recognition module 26 receives control data and performs gesture recognition, with reference to the gesture database 27. The gesture database 27 maps gestures to control actions, or data representative of control actions. Thus the processing unit 20 is configured to recognise a gesture and issue a control action command associated with that gesture.

The alert module 28 is configured to receive positioning data and boundary data, make a determination as to whether the operator is within the boundary (i.e. whether there has been a boundary intrusion), and then generate alert data accordingly. Alert data may be sent to the personal feedback devices 14 and 18. The alert generator may be provided with an alert database 31, mapping boundary intrusions to alerts.

The object systems activation module 29 is operable to receive control action command data from the control input recognition module 26, and convert that command into an appropriate systems signal S for transmission to the object P, such that the object P responds accordingly.

The data D being relayed between the personal device 10 and the processing unit 20 may comprise any combination of sensor data or control action command data (being transmitted from the personal device 10 to the processing unit 20) or display data (being transmitted from the processing unit 20 to the personal device 10) or feedback device / alert data (being transmitted from the processing unit 20 to the personal device 10).

With reference to Figure 2a, a first operational scenario for the apparatus 100 shows an operator O wearing a personal device in proximity to an object P. The personal device 10 is in the form of a headset 110, mounted over the operator's field of view. The personal device 10 is operably communicating data D over a wireless link with processing unit 20.

Surrounding the object P are two boundaries B1 and B2, shown as squares with dashed outlines. These are conceptual boundaries insofar as they would not ordinarily be visible in a real world top-down view as per Figure 2.

However, the operator O is able to view augmented imagery representative of these boundaries, at their personal device 10. Further, as shown in the operator's view in Figure 2b, the apparatus has been configured so that the operator can at all times, if looking in the relevant direction, see visual representations 11 and 12 of the first boundary B1 and the second boundary B2 respectively, surrounding the object P. These boundaries are anchored to the real world object P, that is to say their position relative to the object P is fixed.

The first boundary, B1 is an outer extended boundary around the object P, which defines a first zone and is shown as a hatched volume 111 bounded by the wireframe boundary 11, and being transparent.

The second boundary, B2 is an inner extended boundary around the object P, which defines a second zone and shown as a shaded volume 112 bounded by the wireframe boundary 22, and being transparent.

In this example, boundary B2 is contained with within boundary B1 and the second zone is entirely within the first zone.

In operation under the first operational scenario, as the operator faces the object P, the cameras 102 of the headset unit 110 capture images of the scene and relay these as sensor data to the processing unit 20.

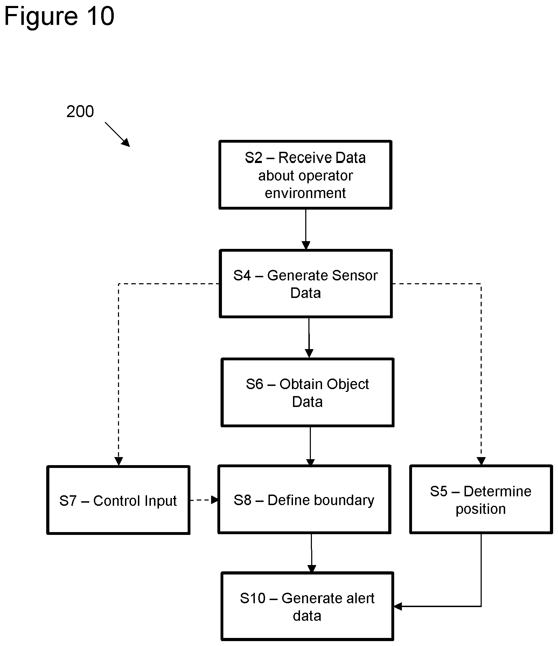

Accordingly, with reference to Figure 10, the first two steps S2 and S4 of a method 200 are performed, where at S2 the system received data about the operator's environment, and where at S4 the system generates sensor data.

Next, at the processing unit 20, the sensor data is received by the object detection module 21 which compares the sensor data to object data in the object database 22. A match between the sensor data and a database entry relating to a predefined object P is found and it is thereby determined that object P is present.

Accordingly, with reference of Figure 10, a third step S6 of a method 200 is performed, where at S6 object data is obtained.

Further, by analysis of the scale and orientation of the object P as represented by the sensor data, the position of the operator can be inferred. The object recognition module 21 intermittently repeats this process to track, substantially in real-time, the position of object P. (Depending on the interval between object recognition processes, the previously known location of the recognised object may be read to a memory (not shown), and optionally combined with data from other positioning resources (e.g. spatial mapping) for an absolute position.)

Accordingly, with reference of Figure 10, a fourth step S5 of a method 200 is performed, where at S5 the operator position is determined. As described here, this step S5 can be performed in dependence on S4; however operator positon may be determined without dependence on the sensor data.

Once the match is established the boundary generator module 25 can be consulted by the processing unit 20 to determine the boundary or boundaries that are associated with this object. In this example, inputting object data relating to object P to the boundary generator 25 returns two nested cuboid boundaries B1 and B2.

Accordingly, with reference of Figure 10, a further step S8 of a method 200 is performed, where at S8 the boundary is defined. The boundary may be defined in dependence on a further step S7 where a control input is used to inform the generation of the boundary. The control input may be in dependence on the sensor data generated at step S4 (e.g. is the control input is a gesture control system making use of gestures within the camera field of view).

Further, by reference to the alert generator 28, the processing unit 20 determines that for each of these particular boundaries for this particular object, object P, the applicable alert is in the form of:
- A visually represented hatch-rendered 3D model of the zone defined by B1, which is transparent; and
- a visually represented shade-rendered 3D model of the zone defined by B2, which is transparent;
- which are both on display to the operator regardless of whether the operator is inside or outside of either boundary.

Once the boundaries, and the alert, and the conditions under which the alert is displayed are retrieved or generated, the processing unit 20 generates appropriate display data, which is relayed to the personal device 10, received by the display 14, and introduced as augmenting imagery 108 into the operator's field of view.

The augmenting imagery is visually representative of the boundaries such that, from the operator's perspective, the 3D model of the boundary is coincident with the respective conceptual boundary. To tend to effect this, 3D models are scaled, positioned, and oriented accordingly.

Display of the 3D model of the object, as augmenting imagery 108 or otherwise, is optional.

Accordingly, with reference of Figure 10, a further step S10 of a method 200 is performed, where at S10 there is generated an alert, to moderate the operator's position.

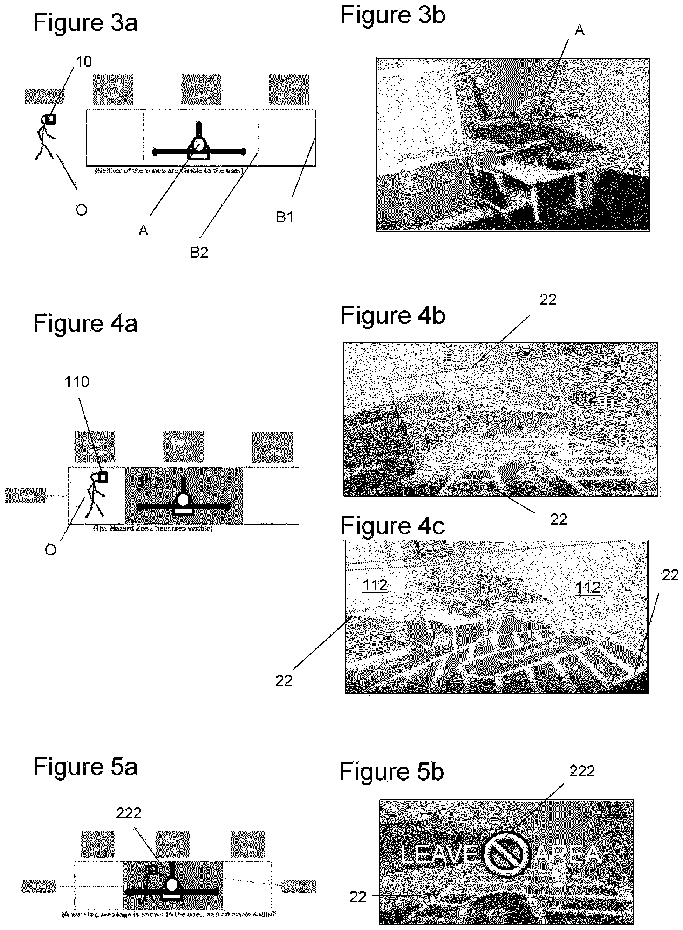

With reference to Figures 3 to 8, a second operational scenario for the apparatus 100 shows an operator O wearing a personal device 10, in the form of a headset 110, and being in proximity to an Aircraft A.

In this second scenario, the processing unit 20 is configured such that the recognition of Aircraft A calls up from the boundary generator 25 a first boundary B1 and a second boundary B2.

The second boundary B2 has, approximately, the form of a first and second wedge. The first wedge has a narrowest point at the intake to the Aircraft A's engine and extends out 80 degrees to the azimuth on each side of the centreline to a radius approximately equal to the length of the aircraft. The second wedge has a narrowest point at the exhaust vents of the engine and extends out at 30 degrees to the azimuth in each direction to a radius of approximately equal to the length of the aircraft.

The first boundary B1 extends beyond the first and second wedge of boundary B2 so as to provide a 2 metre deep buffer zone around the second boundary B2.

Further, the processing unit 20 is configured such that the alert module 28:
provides a first alert signal, issued if the operator is detected as being within the first boundary, whereby the second boundary becomes visible to the operator; and
provides a second alert signal, issued if the operator is detected as being within the second boundary, whereby a warning message anchored to the operator's field of view, becomes visible to the operator.

Accordingly, operation under the second operational scenario, is as follows.

When the operator O is positioned as in Figure 3a and 3b, that is to say stood outside of boundary B1 and boundary B2, then the positioning apparatus 100 will recognise the Aircraft A, call up the relevant boundary and alert data, reference the positional data, and determine that no alerts are necessary. Hence no augmenting imagery 108, 11 or 22, relating to the boundaries is introduced to the operators perspective, and only the Aircraft A is visible in the hangar.

However, when the operator O is positioned as in Figure 4a, 4b and 4c, that is to say within boundary B1 but outside of boundary B2, then the positioning apparatus 100 will:
recognise Aircraft A;
call up the relevant boundary data, specifically B1 and B2 for Aircraft A;
generate the positional data and determine that the operator O is within boundary B1 but not B2;
determine at the alert module 28 that given the object identified, Aircraft A, and the boundaries associated therewith, and the position of the operator in respect of those boundaries, the predetermined alert is to display a visual representation 22 of the second boundary B2 to the operator; and
relay the relevant display data so that the display 14 can introduce augmenting imagery 108 representing the second boundary B2 as a shaded 3D volume 112 in a wireframe 22, anchored to the Aircraft A, into the operator's viewable environment.

Further, when the operator O is positioned as in Figure 5a or 5b, that is to say stood within boundary B1 and within boundary B2, then the positioning apparatus 100 will:
recognise Aircraft A;
call up the relevant boundary data, specifically B1 and B2 for Aircraft A;
generate the positional data and determine that the operator O is within boundary B1 and within boundary B2;
determine at the alert module 28 that given the object identified, Aircraft A, and the boundaries associated therewith, and the position of the operator in respect of those boundaries, the predetermined alert is to display a visual representation 22 of the second boundary B2 to the operator and also to display a warning message 'LEAVE AREA' 222 anchored in the centre of the operator's field of view; and
relay the relevant display data so that the display 14 can introduce augmenting imagery 108 representing:
   the second boundary B2 as a shaded 3D volume 112 in a wireframe 22, and anchored to the real world aircraft A, in to the operator's viewable environment; and
   the warning message 'LEAVE AREA' 222 anchored in the centre of the operator's field of view.

The positioning apparatus 100 of the present example is able to switch between certain boundary scenarios thereby offering the ability to switch according to the particular operation (e.g. maintenance operation) being performed. This switch may be effected automatically by the apparatus 100 communication with the platform or hangar infrastructure, but operation under direct control by the operator is now described.

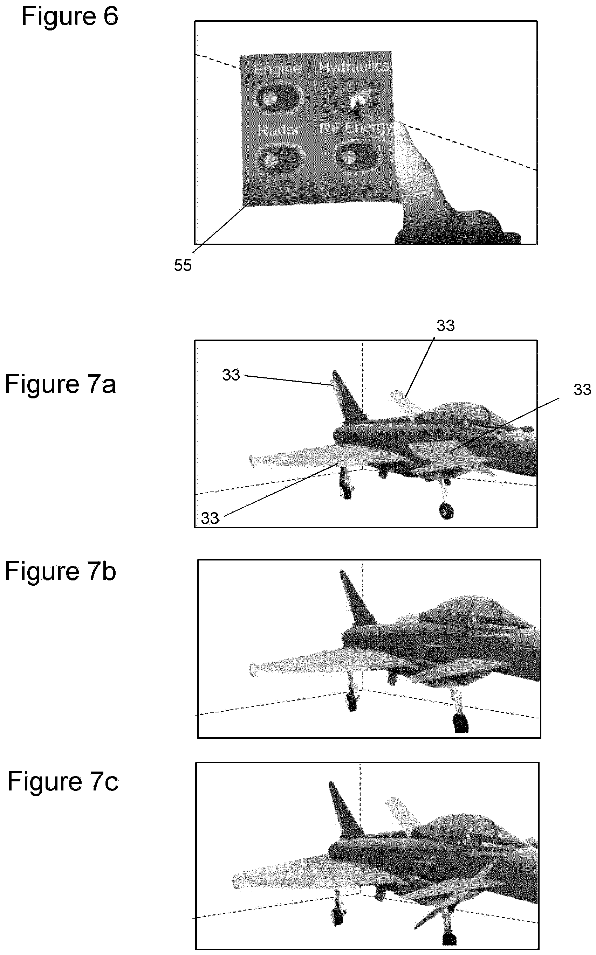

Referring to Figure 6, augmenting imagery 108 representing a control panel 55 can be provided in the operator's field of view and this can be combined with the gesture recognition abilities of the apparatus 100 to effect a switch between boundary scenarios.

Thus, as shown in Figure 6, the Aircraft A may be configured for any one of four boundary scenarios: Engine, Hydraulics, Radar and RF energy. The operator may switch each of these scenarios on or off by reaching out towards the augmented panel 55 and swiping their finger across in the corresponding region of their view.

In more detail what happens here is that the control input device 16 (e.g. cameras 102) generates control data as the gesture is performed. This is relayed to the processing unit 20 where it is received at the control input recognition module 26. From here the gesture can be recognised and related to the data held in the gesture database 27 to call up the corresponding control action command data. The corresponding control action command data can then be send to the boundary generator 25 to update the boundaries for display and can in turn also be sent to the object systems activation module 29 in order to switch on and off the real world systems on the aircraft.

Figures 7a to 7c show the Aircraft A configured for the 'hydraulic' boundary scenario. It can be seen that the boundary elements 33 are augmenting imagery 108 anchored to the Aircraft A, but also animated so as to dynamically alter their position around a fixed reference point (e.g. an axis anchored to the aircraft). The introduction of these boundary elements 33 into the operator's viewable area is prompted by an incursion of the operator into the first boundary B1.

Figure 8 shows the Aircraft A configured for the RF energy boundary scenario. It can be seen that the boundary elements 44 are a set of spherical boundary elements centred on respective RF emitting components of the Aircraft A. The introduction of these boundary elements 44 into the operator's viewable area is prompted by an incursion of the operator into the first boundary B1.

The processing unit 20 may be implemented by one or more microprocessors operably connected with one or more memory devices. Functions or modules or generators within the processing unit 20 may be performed within a common processor and using a common memory device, or may be performed on respective dedicated processors or respective dedicated memory devices.

The wireless communications protocol used to convey data D between the personal device 10 and the processing unit 20 may in an alternative example by provided by a light intensity modulated signal transmitter / receiver. Such technologies can be known as LiFi^{™}.

The personal device and processing unit may be provided within the same unit, which may be a wearable or portable unit. As such, the communication between the personal device and processing unit could be through direct electrical connection.

The personal device may be a wearable headset (which may alternatively be referred to as a head worn display HWD) suitable for virtual reality, mixed reality but alternative personal devices are contemplated. For example, the personal device 10 could alternatively be any portable computer screen (e.g. LED array, OLED array) having a camera facing in the opposite direction to that in which the screen displays, so that the device may be held up to combine the live video feed with augmenting imagery. As such various personal computing devices such as camera phones, tablet computers, and smart watches may be suitable. Any of these may be mounted so as to extend into the user's view.

Where the personal device is wearable, and is worn to extend into the user's view, as a further alternative to options described about, the personal display may instead comprise waveguide technology or a retinal projector.

The personal sensor may, as an alternative to being a pair of imaging devices be a single imaging device, or may be one or more cameras operating outside of visible bands (e.g. IR bands) or may be an active device such as a LiDAR where the scene is subject to controlled illumination prior to processing returns.

In alternative embodiments, the position data may be supplemented or alternatively provided by data from other positioning modules such as spatial mapping (e.g. using a set of IR cameras to monitor large fixed objects such as walls), GPS, fiducial marker sets, or beacons (active or passive).

As an alternative to the personal control input device describe above, there may be provided a physical control actuator (e.g. a touch pad), or a microphone for voice activation.

As an alternative to the personal control input device for switching between hazard scenarios, the processing unit or display device may be able to detect the hazard scenario occurring at the platform, and consequently, and automatically, read the relevant hazard scenario(s) into the user's environment.

The personal device may be able to communicate directly with the object, as well as with the processing unit.

As an alternative to the representation of boundaries by shaded, or transparent three dimensional volumes / 3D objects, there may be provided opaque volumes / 3D objects at the boundaries such that the operator is prevented from seeing within the bounded area.

As an alternative to the object recognition module for object identification, object identification may be performed by the operator inputting observed spatial data (e.g. lateral and longitudinal maxima relating to the object) and classifying the observed spatial data against specified objects (e.g. a 'pick list' of predetermined object types) and subsequent processing at the processing unit to generate the relevant object data.

As an alternative to object recognition from direct visual cues, such as the shape of the object itself, object recognition may be effected by indirect visual cues or fiducial markers such as QR codes or text recognition, provided that relationships between QR codes and the object they represent are predetermined and stored in the object recognition database.

## Claims

1. A positioning apparatus for an operator at an object, the apparatus comprising:
- A personal sensor, whereby the operator's environment may be assessed to generate sensor data;
- A personal feedback device for issuing at least one alert signal to the operator;
- A processing unit, operably connected to the personal sensor, and the personal feedback device, the processing unit comprising:
- an object identification module, for obtaining object data relating to the object;
- a boundary module for defining, using the object data, at least one first extended boundary for the object; and
- a positioning module for generating positioning data for determining the position of the personal sensor relative to the object, and
- an alert module configured such that a first alert signal is issued to the operator in dependence on the position of the personal sensor with respect to the first extended boundary for the object.

2. A positioning apparatus according to claim 1 configured such that if the positioning data indicates that the operator is within the first extended boundary for the object then the first alert signal is generated.

3. A positioning apparatus according to claim 1 or 2 wherein the boundary module additionally defines at least one second extended boundary which may be combined with the object data or with the at least one first extended boundary, to define a second extended boundary for the object.

4. A positioning apparatus according to claim 3 wherein the at least one first extended boundary is stood-off from at least a portion of the object and the at least one second extended boundary is bounded between the first extended boundary and the object.

5. A positioning apparatus according to claim 3 or 4 configured such that if the positioning data indicates that the operator is within the second extended boundary, then a second alert signal is generated.

6. A positioning apparatus according to any one of claims 3, 4 or 5 further comprising:
- A personal display, operably connected to the processing unit whereby augmenting imagery can be introduced into the operator's field of view, wherein the positioning apparatus is configured such that the first alert signal is a visual representation of the second extended boundary, shown at the display as corresponding augmenting imagery.

7. A positioning apparatus according to claim 6 wherein the visual representation of the second extended boundary, shown at the display as corresponding augmenting imagery, is a wireframe volume or a 3D volume, scaled to match the second extended boundary.

8. A positioning apparatus according to any of claims 1 to 5, further comprising:
- A personal display, operably connected to the processing unit whereby augmenting imagery can be introduced into the operator's field of view,
And wherein the first alert signal comprises augmenting imagery.

9. A positioning apparatus according to any of the preceding claims wherein the object identification module comprises:
- An object recognition module; and
- An object database comprising at least one set of object data, each set of object data being associated with a corresponding predetermined object;
Whereby the processing unit is configured to receive sensor data, compare it with the at least one set of object data in the object database, and in the event that the correlation between the sensor data and one of the at least one set of object data is above a threshold, generating a signal indicating the identification of a predetermined object.

10. A positioning apparatus according to claim 9 whereby the processing unit is configured to compare the sensor data to the object data of the identified predetermined object, and generate at least a portion of the positioning data relating the position of the identified predetermined object to the position of the sensor.

11. A positioning apparatus according to claim 9 or 10 wherein the object database comprises object data for at least one aircraft, and where the corresponding predetermined object for the at least one aircraft is the real-world aircraft, or a real-world visual cue associated with the at least one aircraft.

12. A positioning apparatus according to any one of the claims 1 to 10 wherein the object is a vehicle and optionally an aircraft in an indoor maintenance bay.

13. A positioning apparatus according to any of the preceding claims wherein the processing unit is remote from the personal sensor and each is provided with a communications module for wireless communications, the wireless communications optionally being effected by intensity modulated free space optical methods.

14. A positioning apparatus according to any one of the preceding claims wherein the boundary module is configured to define at least one alternative extended boundary which may be combined with at least one set of object data to define an alternative extended boundary for the object.

15. A positioning method for determining the position of an object relative to an operator comprising:
Receiving data about the operator's environment at a personal sensor to generate sensor data;
At an object identification module, obtaining object data relating to the object;
At a boundary module, determining at least one first extended boundary for combination with the object data to define a first extended boundary for the object;
At a positioning module, determining the position of the personal sensor relative to the object,
Providing an alert module for, in dependence on the position of the personal sensor with respect to the boundary, generating alert data for causing a feedback device to issue a first alert signal to the operator.
